# EUROPÄISCHE PATENTANMELDUNG

(11) **EP 3 960 389 A1**
(43) Veröffentlichungstag der Anmeldung: **02.03.2022**
(21) Anmeldenummer: 20192318.2
(22) Anmeldetag: 24.08.2020
(51) Int. Cl.: B25H 7/04, G01C 15/02, E01C 23/16

(54) **MARKIERSYSTEM UND VERFAHREN ZUM MARKIEREN**

(71) Anmelder: Hilti Aktiengesellschaft, 9494 Schaan (LI)
(72) Erfinder: Schmidt, Peer, 88131 Lindau (DE); Fladerer, Daniel, 6850 Dornbirn (AT)
(74) Vertreter: Hilti Aktiengesellschaft Corporate Intellectual Property

(57) **Zusammenfassung**

Die Erfindung betrifft ein Verfahren zum Aufbringen einer Positionsmarkierung (18) für eine Arbeitsposition auf einen Untergrund (14), beispielsweise eine Wand, eine Decke, ein Fußboden oder dergleichen, an einer ihr zugeordneten Markierungsposition, umfassend die Schritte: a. Unsystematisches oder systematisches Bewegen eines tragbaren Markiersystems (12) über einen Markierbereich (28) des Untergrunds (14); b. Ermitteln, vorzugsweise regelmäßiges Ermitteln, wenigstens einer Position des Markiersystems (12); c. Markieren an der ermittelten Position des Markiersystems (12), sofern die ermittelte Position mit der Markierungsposition übereinstimmt oder zumindest bis auf ein vordefiniertes oder vordefinierbares Genauigkeitsmaß mit der Markierungsposition übereinstimmt. Des Weiteren betrifft die Erfindung ein Markiersystem (12). Die Erfindung ermöglicht es, besonders präzise und zeitsparend Positionsmarkierungen (18) für Arbeitspositionen auf einen Untergrund (14) aufzubringen.

## Beschreibung

Die vorliegende Erfindung betrifft ein Verfahren zum Aufbringen einer Positionsmarkierung für eine Arbeitsposition auf einen Untergrund, beispielsweise eine Wand, eine Decke, ein Fußboden oder dergleichen, an einer der Positionsmarkierung zugeordneten Markierungsposition. Des Weiteren betrifft die Erfindung ein Markiersystem.

Üblicherweise werden im Rahmen von Bauarbeiten an Gebäudeelementen Arbeitspositionen, beispielsweise Bohrlochpositionen oder Schnittlinien, ausgemessen und mittels Positionsmarkierungen markiert, um anschließend beispielsweise präzise bohren oder sägen zu können. Diese notwendigen Vorarbeiten sind nicht nur sehr zeitaufwändig, sie sind zudem oftmals mit erheblichen Messfehlern behaftet.

Es ist daher Aufgabe der vorliegenden Erfindung, ein Verfahren sowie ein Markiersystem vorzustellen, die es erlauben, besonders präzise und zeitsparend Positionsmarkierungen für Arbeitspositionen auf einen Untergrund aufzubringen.

Gelöst wird die Aufgabe durch ein Verfahren zum Aufbringen einer Positionsmarkierung für eine Arbeitsposition auf einen Untergrund, beispielsweise eine Wand, eine Decke, ein Fußboden oder dergleichen, an einer ihr zugeordneten Markierungsposition, umfassend die Schritte:
a. Unsystematisches oder systematisches Bewegen eines tragbaren Markiersystems innerhalb eines Markierbereichs;
b. Ermitteln, vorzugsweise regelmäßiges Ermitteln, wenigstens einer Position des Markiersystems;
c. Markieren an der ermittelten Position des Markiersystems, sofern die ermittelte Position mit der Markierungsposition übereinstimmt oder zumindest bis auf ein vordefiniertes oder vordefinierbares Genauigkeitsmaß mit der Markierungsposition übereinstimmt.

Der Erfindung liegt somit der Gedanke zugrunde, dass ein Benutzer, der auf dem Untergrund die Positionsmarkierung anbringen möchte, in der Regel zumindest ungefähr den Bereich kennt oder abschätzen kann, wo sich die Positionsmarkierung befinden soll. Soll beispielsweise ein Durchbruch für eine Zuleitung für ein Sanitärelement, beispielsweise eine Wasserzufluss-Leitung eines Waschbeckens, hergestellt werden, so kann der Benutzer abschätzen, dass sich dieser Durchbruch in einem Bereich in der Nähe, jedoch unterhalb, des Waschbeckens zu befinden hat. Somit kann der Benutzer das Markiersystem in diese Nähe des Waschbeckens bringen und innerhalb eines gewissen Bereiches, und damit innerhalb eines Markierbereiches, systematisch oder unsystematisch bewegen. Sobald das Markiersystem die Markierungsposition geeignet erreicht, kann dann das Markiersystem aufgrund der verfahrensgemäßen Ermittlung seiner Position die Positionsmarkierung präzise anbringen. Ein manuelles Abmessen sowie ein manuelles Markieren können somit entfallen; Fehlplatzierungen der Positionsmarkierung werden vermieden und der Zeitaufwand lässt sich erheblich reduzieren.

Da üblicherweise Positionsmarkierungen im Verhältnis zur Größe des Untergrundes, beispielsweise eine Wand oder ein Fußboden, klein sind, kann auch der Markierbereich verhältnismäßig klein gewählt werden. Insbesondere kann der Markierbereich als die Markierungsposition beinhaltender und umgebender Bereich des Untergrundes gewählt werden oder sein. Zudem kann der Markierbereich verhältnismäßig klein gewählt sein. Beispielsweise kann er höchstens 10 Prozent, besonders bevorzugt höchstens 3 Prozent, der Oberfläche des Untergrundes umfassen. Der Markierbereich kann beispielsweise weniger als 1 m², bevorzugt weniger als 0,5 m², umfassen. Unterdessen kann der Untergrund, beispielsweise eine mit der Positionsmarkierung zu versehende Wand, eine zu markierende Fläche von wenigstens 10 m², insbesondere auch von wenigstens 50 m², aufweisen. Somit lässt sich auch durch einen derart verhältnismäßig klein gewählten Markierbereich der zeitaufwand reduzieren.

Insbesondere kann die Positionsmarkierung eine einfarbige und/oder strichförmige Form wie beispielsweise eine Linie, ein Kreuz und/oder einen Kreis, aufweisen. Sie kann alternativ oder ergänzend auch wenigstens ein Symbol, eine Ziffer und/oder ein Schriftzeichen umfassen.

Die Positionsmarkierung kann durch Spritzen, beispielsweise mittels einer Tintenstrahldüse oder dergleichen, durch Aufpressen und/oder Aufkleben, durch mechanische Bearbeitung, beispielsweise durch Gravieren, und/oder mittels elektromagnetischer Wellen, z. B. mittels eines Lasers, insbesondere durch lokales Erhitzen, auf die Umgebung aufgebracht werden.

Die ermittelte beziehungsweise zu ermittelnde Position des Markiersystems kann einer Position einer Markiereinheit des Markiersystems oder eines Markierers der Markiereinheit, beispielsweise einer Tintenstrahldüse, entsprechen. Insbesondere kann die Position einer Position innerhalb des Markiersystems entsprechen, an der das Markiersystem den Untergrund bearbeitet, beispielsweise einen Farbpunkt auf den Untergrund aufbringt. Dazu kann die Position eines Zielpunkts innerhalb des Markiersystems ermittelt werden und die Position des Markiersystems durch Addition eines geeigneten Offsetwertes aus der Position des Zielpunktes abgeleitet werden. Dazu kann der Offsetwert vektorwertig sein.

Der Herstellungsaufwand für das Markiersystem kann trotz der erheblichen Vorteile, die das erfindungsgemäße Verfahren unter Verwendung des Markiersystems mit sich bringt, gering gehalten werden. Da verfahrensgemäß die Position des Markiersystems überwacht wird, genügt es letzten Endes, dass zu irgendeinem Zeitpunkt das Markiersystem die Markierungsposition geeignet erreicht. Somit ist eine aufwändige und kostenintensive Mechanik wie beispielsweise bei Druckmaschinen, insbesondere bei Plottern für große Flächen, durch die das Markiersystem mit hoher Präzision auf einer vorgegebenen Route innerhalb eines sehr großen Verfahrbereichs bis zur Markierungsposition fahren kann, nicht erforderlich.

Auch ist es nicht erforderlich, das Markiersystem am Untergrund zu fixieren, insbesondere selbst dann nicht, wenn als Untergrund eine vertikal orientierte Wand oder eine nach unten weisende Fläche einer Decke genutzt wird. Somit lassen sich beispielsweise auch Decken oder dergleichen mit Positionsmarkierungen versehen.

Die Positionsmarkierung und/oder die Markierungsposition können in einem BIM (Building Information Modeling)-Modell, einem CAD-Modell und/oder dergleichen gespeichert sein. Allgemein können sie von einem Gebäudeplan und/oder einem Bauplan stammen.

Unter einem "tragbaren" System kann ein System verstanden werden, das von einem Benutzer über längere Zeit in der Schwebe gehalten werden kann. Insbesondere kann das tragbare System ein Gewicht von höchstens 10 kg, vorzugsweise von höchstens 3 kg, besonders bevorzugt von höchstens 2 kg, aufweisen.

Das Markiersystem kann mehrteilig sein. Beispielsweise kann das Positionsermittlungssystem ein separates Sendeteil und ein am übrigen Markiersystem Teil befindliches Empfangsteil aufweisen. Dann kann sich die Tragbarkeit des Markiersystems lediglich auf eines der Teile des Markiersystems beziehen, insbesondere auf ein von dem Benutzer zu bewegendes und/oder in der Schwebe zu haltendes Teil.

Das Genauigkeitsmaß und damit eine maximal zulässige Distanz zwischen der relativ zur Umgebung bestimmten und der zu bestimmenden Markierungsposition kann auf höchstens 1 cm, vorzugsweise höchstens 2 mm, besonders bevorzugt höchstens 1 mm, begrenzt sein.

Denkbar ist, dass wenigstens zwei Positionsmarkierungen auf dem Untergrund aufgebracht werden. Dazu kann der Markierbereich als nicht zusammenhängender Bereich gewählt sein. Insbesondere können jeweils Teilbereiche, in denen jeweils zumindest eine der Markierungspositionen der jeweiligen Positionsmarkierungen zu erwarten ist, gewählt werden. Der Markierbereich kann dann aus den Teilbereichen zusammengesetzt sein.

Unter einem "Markieren an der ermittelten Position" kann verstanden werden, dass die vollständige Positionsmarkierung auf den Untergrund aufgebracht wird. Alternativ oder ergänzend kann darunter verstanden werden, dass bei geeignetem Erreichen der Markierungsposition lediglich ein Teil der Positionsmarkierung aufgebracht wird. Soll beispielsweise ein Kreuz aufgebracht werden, ist denkbar, bei Erreichen einer entsprechenden Position lediglich einen Teil des Kreuzes, beispielsweise einen der vier Arme des Kreuzes, auf den Untergrund aufzubringen. Die übrigen Teile des Kreuzes können dann zu späteren Zeitpunkten, bei Erreichen geeignet versetzter Positionen, aufgebracht werden.

Verfahrensgemäß kann ein zusätzlicher Schritt vorgesehen sein, innerhalb dessen eine Information darüber in einem Speicher abgespeichert wird, dass ein Teil der Positionsmarkierung oder die Positionsmarkierung insgesamt auf die Umgebung aufgebracht worden ist. Vor einem gegebenenfalls erneuten Aufbringen des Teils der Positionsmarkierung oder der Positionsmarkierung insgesamt kann dann in einem weiteren Verfahrensschritt geprüft werden, ob der jeweilige Teil der Positionsmarkierung oder die Positionsmarkierung insgesamt bereits aufgebracht sind. Gegebenenfalls kann dann ein doppeltes Aufbringen dieses Teils beziehungsweise der Positionsmarkierung insgesamt vermieden werden.

Bei einer besonders bevorzugten Klasse von Verfahren kann ein ortsfestes Koordinatensystem relativ zum Untergrund festgelegt werden. Insbesondere kann das Koordinatensystem unabhängig vom Markiersystem festgelegt werden. Ein Bezugspunkt des Koordinatensystems kann beispielsweise im Bereich einer Ecke der Umgebung gewählt sein oder werden. Die Festlegung kann dem Schritt a vorausgehen. Das Koordinatensystem kann ein-, zwei oder dreidimensional ausgebildet sein. Somit lässt sich die Markierungsposition und damit der Ort der Positionsmarkierung relativ zum Koordinatensystem festlegen.

Vorzugsweise wird auch eine Lage des Markiersystems ermittelt. Die Lage kann relativ zur Schwerkraftrichtung ermittelt werden. Somit kann anhand der Kenntnis der Lage der Offsetwert geeignet angepasst werden.

Weitere Zeitersparnisse lassen sich erzielen, wenn wenigstens zwei Positionen und/oder ein Positionsbereich des Markiersystems parallel ermittelt werden.

Zum Markieren an der ermittelten Position kann eine Markiereinheit mit wenigstens zwei Markierern, vorzugsweise wenigstens 24 Markierern, besonders bevorzugt wenigstens 128 Markierern, verwendet werden. Die Markiereinheit kann dazu insbesondere einer Anordnung von mehreren Markierern entsprechen. Die Anordnung kann zeilenförmig oder flächig, insbesondere polygon, ausgebildet sein. Die ermittelte beziehungsweise zu ermittelnde Position des Markiersystems kann der Position eines der Markierer entsprechen. Vorzugsweise werden mehrere Positionen des Markiersystems im Sinne von Schritt b des Verfahrens ermittelt. Besonders bevorzugt wird für jeden der Markierer eine solche Position des Markiersystems ermittelt. Dies kann durch Ermitteln der Position des Zielpunktes und anschließender Addition Markierer-spezifischer Offsetwerte erfolgen. Auch diese Offsetwerte können vektorwertig sein.

Wenigstens einer der Markierer kann eine Tintenstrahldüse, ein mechanischer Farbstoffübertrager, beispielsweise ein Stempel, eine Bearbeitungsspitze, beispielsweise eine steuerbare Nadelspitze, zur punktuellen Bearbeitung des Untergrundes oder dergleichen sein.

Die Bewegung kann passiv erfolgen. Beispielsweise kann der Benutzer des Markiersystems das Markiersystem manuell über den Markierbereich bewegen. Die Bewegung kann eine Wischbewegung sein. Sie kann alternativ oder ergänzend eine von dem Benutzer ausführbare und vorzugsweise für den Benutzer ergonomische Bewegung sein.

Besonders zahlreiche Anwendungsfälle und damit besondere Nutzenvorteile ergeben sich, wenn die Positionsmarkierung an und/oder in einem Gebäude oder einem Gebäudeelement markiert wird, das heißt, wenn die Umgebung ein Gebäude oder ein Gebäudeelement ist. Dabei kann unter einem Gebäudeelement auch ein Teilelement, beispielsweise ein Teil einer Wand, verstanden werden. Allgemein eignet sich das Verfahren besonders gut zur Anwendung im Bereich des Hochbaus und/oder des Tiefbaus.

Zeitersparnisse können auch erzielt werden, wenn mehrere Positionsmarkierungen innerhalb des Markierbereichs markiert werden. Dazu kann die Übereinstimmung der Position des Markiersystems gemäß Schritt c im Hinblick auf jede Markierungsposition der jeweiligen Positionsmarkierungen geprüft werden.

Ist - wie eingangs beschrieben und oftmals der Fall - zumindest eine grobe Abschätzung hinsichtlich der Markierungsposition möglich, so kann zunächst das Markiersystem im Rahmen einer initialen Positionierung zu einem Startpunkt innerhalb des Markierbereichs bewegt werden, um den Markierbereich möglichst klein zu halten und damit eine weitere Zeitersparnis zu erzielen.

In den Rahmen der Erfindung fällt des Weiteren ein Markiersystem zum Markieren einer Positionsmarkierung für eine Arbeitsposition auf einen Untergrund, beispielsweise eine Wand, eine Decke, ein Fußboden oder dergleichen, an einer der Positionsmarkierung zugeordneten Markierungsposition, umfassend eine Markiereinheit mit wenigstens einem Markierer, ein Positionsermittlungssystem zur Erfassung einer Position des Markiersystems sowie eine Steuerungseinheit, die eingerichtet ist, wenigstens einmalig mittels der Markiereinheit eine Positionsmarkierung oder zumindest einen Teil der Positionsmarkierung auf den Untergrund zu markieren, falls sich das Markiersystem an der Markierungsposition oder in einem einem vordefinierten oder vordefinierbaren Genauigkeitsmaß entsprechenden Messbereich um die Markierungsposition herum befindet, und keine Markierung zu markieren, wenn sich das Markiersystem außerhalb des Messbereichs befindet.

Insbesondere kann das Markiersystem zur Ausführung des erfindungsgemäßen Verfahrens eingerichtet sein.

Somit fällt in den Rahmen der Erfindung allgemein auch ein Markiersystem zum Markieren einer Positionsmarkierung auf einen Untergrund, beispielsweise eine Wand, eine Decke, ein Fußboden oder dergleichen, an einer der Positionsmarkierung zugeordneten Markierungsposition, umfassend eine Markiereinheit mit wenigstens einem Markierer, ein Positionsermittlungssystem zur Erfassung einer Position des Markiersystems sowie eine Steuerungseinheit, die eingerichtet ist, das erfindungsgemäße Verfahren umzusetzen.

Das Positionsermittlungssystem kann eingerichtet sein, die Position des Markiersystems relativ zu einem unabhängig vom Markiersystem definierbaren oder definierten und/oder ortsfesten Koordinatensystem zu ermitteln.

Das Markiersystem kann eine Speichereinheit zum Speichern wenigstens einer Markierungsposition wenigstens einer Positionsmarkierung aufweisen.

Das Markiersystem kann einen Handgriff aufweisen, um dem Benutzer eine manuelle Bewegung zu erleichtern.

Alternativ oder ergänzend kann das Markiersystem einen Führungsstab und/oder eine Aufnahme für einen Führungsstab aufweisen. Somit lässt sich das Markiersystem nach Art eines Wischmobs oder dergleichen über den Untergrund bewegen.

Eine präzise Positionsbestimmung des Markiersystems lässt sich erreichen, wenn das Markiersystem wenigstens einen Distanzsensor, beispielsweise ein Laserdistanzmessgerät, eine Streifenlichtquelle in Verbindung mit einer Streifenlicht-Empfangs- und Auswertungseinheit, einen Laufzeit-Sensor, auch als Time-of-Flight-Sensor bezeichnet, und/oder einen Beschleunigungssensor aufweist. Vorzugsweise kann das Markiersystem wenigstens zwei Distanzsensoren aufweisen. Die wenigstens zwei Distanzsensoren können Distanzen in einem Winkel, insbesondere in einem rechten Winkel, zueinander erfassen. Das oder die Distanzsensoren können selbsttarierend sein. Beispielsweise kann sich wenigstens ein Distanzsensor selbsttätig zur Messung in einer vertikalen Richtung ausrichten. Alternativ oder ergänzend kann sich Beispielsweise kann sich auch wenigstens ein Distanzsensor selbsttätig zur Messung in einer horizontalen Richtung ausrichten.

Alternativ oder ergänzend kann das Markiersystem, insbesondere das Positionsermittlungssystem, wenigstens einen Beschleunigungs-, einen Geschwindigkeits- und/oder einen Weglängensensor aufweisen. Das Markiersystem, insbesondere das Positionsermittlungssystem, kann eine Inter- und/oder Extrapolationseinheit zur Inter- und/oder Extrapolation einer Position des Markiersystems aufweisen. Ein solcher Sensor kann einen Teil der Inter- und/oder Extrapolationseinheit bilden oder eingerichtet sein, wenigstens eines seiner Messergebnisse an die Inter- und/oder Extrapolationseinheit zu übermitteln. Ein solcher Sensor kann optisch arbeiten, beispielsweise mittels einer optischen Abtastung des Untergrunds nach Art einer Laser-basierten Computermaus.

Denkbar ist auch, dass das Markiersystem eingerichtet ist, dem Benutzer eine Augmented-Reality (AR)-Wahrnehmung oder Virtual-Reality (VR)-Wahrnehmung seines Umfelds zu verschaffen. Dazu kann das Markiersystem ein AR-System, beispielsweise eine AR-Brille, oder ein VR-System, beispielsweise eine VR-Brille, aufweisen. Das Markiersystem kann dann eingerichtet sein, mittels des AR-Systems oder des VR-Systems die Positionsmarkierung, insbesondere vor Aufbringen auf die Umgebung, dem Benutzer darzustellen. Hierdurch kann der Benutzer unterstützt werden, das Markiersystem in die Nähe der Markierungsposition zu bringen.

Das Markiersystem, insbesondere das Positionsermittlungssystem, kann ein Tachymeter, insbesondere eine Totalstation, aufweisen und/oder zur Kommunikation mit einem Tachymeter eingerichtet sein. Durch die Verwendung eines Tachymeters lassen sich Positionen mit besonders hoher Präzision einfach ermitteln.

Bei einer Klasse von Ausführungsformen kann vorgesehen sein, dass das Markiersystem ein motorisiertes Fortbewegungsmittel umfasst oder dass das Markiersystem an dem motorisierten Fortbewegungsmittel anordenbar ist. Das Fortbewegungsmittel kann unbemannt sein. Es kann autonom fortbewegend und/oder fortbewegbar ausgebildet sein. Das Fortbewegungsmittel kann ein Flugobjekt wie beispielsweise eine Drohne und/oder ein Fahrzeug, beispielsweise ein Fahrroboter, sein oder und/oder ein solches aufweisen.

Bevorzugt umfasst das Markiersystem eine Stromquelle. Die Stromquelle kann wiederaufladbar sein; beispielsweise kann es sich bei der Stromquelle um einen wiederaufladbaren Akkumulator, insbesondere einen lithiumbasierten Akkumulator, handeln.

Eine besonders einfache Variante des Verfahrens und damit auch eine besonders einfache Ausführungsform des zur Umsetzung des Verfahrens eingerichteten Markiersystems lässt sich erreichen, wenn eine zu markierende Position auf den Untergrund projiziert wird.

Beispielsweise kann eine zu markierende Höhenlage mittels eines Rotationslasers und/oder eines Linienlasers in Form einer auf den Untergrund projizierten Licht-Linie definiert werden. Das tragbare Markiersystem kann einen optischen Empfänger, vorzugsweise einen Zeilensensor mit mehreren lichtempfindlichen Pixeln, aufweisen.

Dann kann der Benutzer das tragbare Markiersystem im Bereich der projizierten Licht-Linie über den Untergrund bewegen. Dieser Bereich kann den Markierbereich bilden.

Die Position des Markiersystems lässt sich ermitteln, indem überprüft wird, ob der optische Empfänger, insbesondere eines der lichtempfindlichen Pixel, Licht der projizierten Licht-Linie detektiert. Vorzugsweise kann dazu das Licht der Licht-Linie durch den Rotations- und/oder Linienlaser codiert, beispielsweise amplitudenmoduliert oder getaktet, sein. Die Position lässt sich somit als Relativposition des optischen Empfängers beziehungsweise des betreffenden Pixels relativ zur Licht-Linie, gegebenenfalls um einen Offset-Wert korrigiert, ermitteln.

Dem optischen Empfänger kann ein Markierer und insbesondere im Falle mehrerer Pixel können einem oder mehreren der Pixel jeweils ein geeignet positionierter Markierer zugeordnet sein, der angesteuert wird, sobald der optische Empfänger beziehungsweise das jeweilige Pixel Licht der Licht-Linie detektiert. Darüber hinaus kann der optische Empfänger Pixel, insbesondere außermittig, aufweisen, denen kein Markierer zugeordnet ist. Wird von einem dieser Pixel Licht der Licht-Linie detektiert, so bedeutet dies, dass das Markiersystem zu weit beziehungsweise oder unterhalb der Licht-Linie gehalten wird. Dementsprechend können auf einer Anzeigeeinheit dem Benutzer entsprechende Richtungspfeile als Positionsinformationen beziehungsweise als Hinweis darauf, in welche Richtung das Markiersystem bewegt werden sollte, angezeigt werden.

Somit kann das Markiersystem eingerichtet sein, eine auf die Umgebung projizierte Lichtgeometrie, beispielsweise eine Linie, einen Punkt und/oder einen Kreis, auf die Umgebung aufzubringen. Das Markiersystem kann somit insbesondere eingerichtet sein, die Lichtgeometrie, beispielsweise mittels Tinte oder Druckfarbe, auf der Umgebung nachzuzeichnen.

Das Markiersystem kann zudem in mehreren Betriebsmodi betreibbar sein. Ein Betriebsmodus kann dabei einer Einrichtung des Markiersystems entsprechen, durch die das Markiersystem zur Umsetzung einer jeweiligen Variante des erfindungsgemäßen Verfahrens eingerichtet ist.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

**Es zeigen:**
- **Fig. 1a und 1b**: schematische Darstellungen eines in zwei Betriebsmodi betreibbaren Markiersystems und dessen Nutzung durch einen Benutzer;
- **Fig. 2**: eine perspektivische Darstellung eines Markiersystems von schräg oben;
- **Fig. 3**: eine Draufsicht auf das Markiersystem gemäß Fig. 2 sowie
- **Fig. 4**: eine Schnittansicht des Markiersystems gemäß Fig. 2.

Zur Erleichterung des Verständnisses sind in den unterschiedlichen Figuren der Zeichnung sowie in der nachfolgenden Figurenbeschreibung soweit möglich gleichen oder sich zumindest funktional entsprechenden Elementen jeweils dieselben Bezugszeichen zugeordnet.

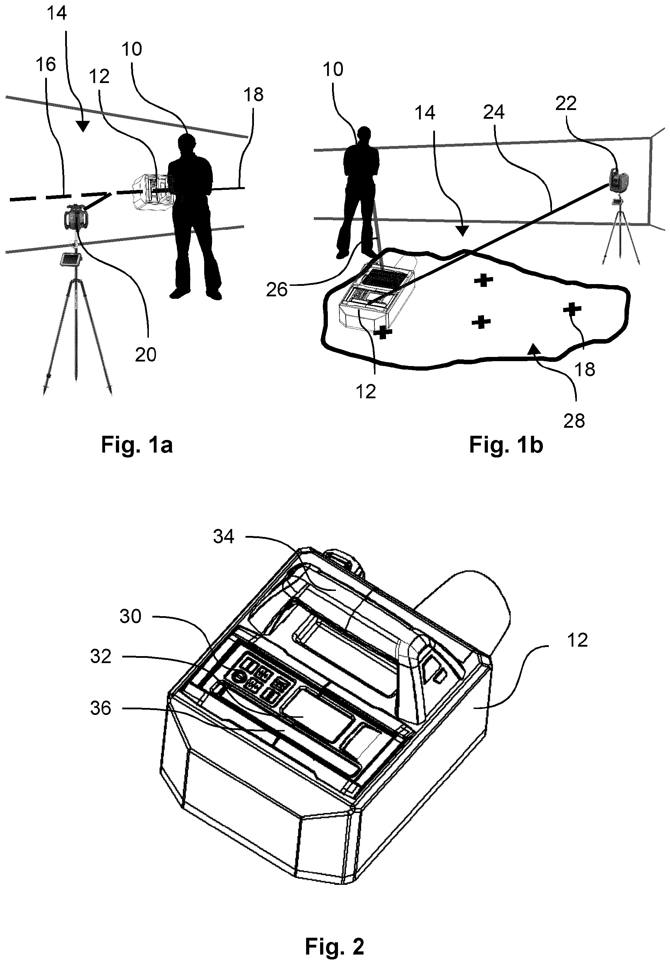

**Fig. 1a** zeigt einen Benutzer **10,** der ein tragbares Markiersystem **12** benutzt. Das Markiersystem 12 wird in der in Fig. 1a dargestellten Situation in einem ersten Betriebsmodus betrieben, in dem das Markiersystem 12 eine auf eine Umgebung **14,** hier eine Wand, projizierte Licht-Linie **16** nachzeichnet. Die Umgebung 14, d. h. die Wand, bildet ein Gebäudeelement und somit einen Teil eines Gebäudes.

Um die Licht-Linie 16 von einer vom Markiersystem 12 wie nachfolgend beschrieben erzeugten Positionsmarkierung **18** zu unterscheiden, ist die Licht-Linie 16 in Fig. 1a gestrichelt dargestellt.

Die Licht-Linie 16 wird durch einen Rotationslaser **20** erzeugt. Der Rotationslaser 20 ist eingerichtet, die Licht-Linie 16 horizontal auf einer sich beispielsweise aus einem Bauplan ergebenden gewünschten Höhe auf die Umgebung 14 zu projizieren. Entsprechend der Licht-Linie 16 soll nunmehr der Verlauf der Licht-Linie 16 als Positionsmarkierung 18, insbesondere dauerhaft, auf der Umgebung 14 markiert werden. Beispielsweise kann dann die Positionsmarkierung 18 als Markierung für einen späteren Verlauf einer Schnittlinie eines Durchbruchs durch die Umgebung 14, also durch die Wand, bzw. als Markierung einer Arbeitsposition, entlang der ein Schnitt auszuführen ist, vorgesehen sein. Ein vom Markiersystem 12 unabhängiges, ortsfestes, zumindest eindimensionales Koordinatensystem ergibt sich somit in diesem Betriebsmodus jeweils durch die durch die Licht-Linie 16 definierte Höhe als Referenz und einer Vertikallinie als Koordinatenachse.

Um die Positionsmarkierung 18 zu markieren, bewegt der Benutzer 10 das Markiersystem 12 derart beispielsweise von einem seitlichen Ende der Umgebung 14 zu einem gegenüberliegenden seitlichen Ende, dass die Licht-Linie 16 auf einen optischen Empfänger des Markiersystems 12 fällt. Der optische Empfänger weist eine gewisse, insbesondere in der Lage des Markiersystems 12 gemäß Fig. 1a vertikale, Ausdehnung aus, sodass der Benutzer 10 das Markiersystem 12 lediglich annähernd horizontal entlang der Licht-Linie 16 bewegen braucht. Insbesondere kann der Benutzer 10 das Markiersystem 12 in einem sich in etwa aus der Größe des optischen Empfängers ergebenden Markierbereich ober- und unterhalb sowie entlang der Licht-Linie 16 bewegen.

Das Markiersystem 12 weist auf einer dem Untergrund 14 zugewandten Seite eine Markiereinheit mit mehreren Markierern auf. Je nach Pixel, durch das Licht der Licht-Linie 16 detektiert wird, steuert eine Steuereinheit des Markiersystems 12 gegebenenfalls einen dem Pixel zugeordneten Markierer der Markiereinheit an und strahlt dadurch an einer dem jeweiligen Pixel geeignet entsprechenden Position Tinte auf die Umgebung 14, sodass im Laufe der Zeit auf der Umgebung 14 die Positionsmarkierung 18 aufgebracht wird. Im Falle, dass dem jeweiligen Pixel kein Markierer zugeordnet ist, wird auf einer Anzeigeeinheit des Markiersystems 12 eine Positionsinformation in Form von Richtungspfeilen dargestellt.

**Fig. 1b** zeigt den Benutzer 10 bei einer Benutzung des tragbaren Markiersystems 12 in einem zweiten Betriebsmodus. In diesem zweiten Betriebsmodus werden in einer Speichereinheit des Markiersystems 12 einschließlich ihrer Markierungspositionen gespeicherte Positionsmarkierungen 18 eines Bauplans direkt auf einem Untergrund 14, hier ein Fußboden, markiert. Auch diese Umgebung 14, d. h. der Fußboden, bildet ein Gebäudeelement und somit einen Teil eines Gebäudes. Von den zu markierenden Positionsmarkierungen 18 sind zum in Fig. 1b dargestellten Zeitpunkt bereits mehrere Positionsmarkierungen 18 markiert.

Die Positionsmarkierungen 18, die in Fig. 1b schematisch als Kreuze dargestellt sind und von denen aus Gründen der Übersichtlichkeit lediglich eine Positionsmarkierung 18 mit einem Bezugszeichen markiert ist, können beispielsweise Markierungen von Arbeitspositionen darstellen, an denen beispielsweise Bohrungen oder dergleichen auszuführen sind.

Im Unterschied zur vorangehend in Bezug auf Fig. 1a geschilderten Verfahrensvariante wird bei der in Fig. 1b dargestellten Variante das Markiersystem 12 durch eine motorisierte Totalstation **22** bei der Positionsermittlung durch ein Positionsermittlungssystem des Markiersystems 12 unterstützt. Dazu ist das Markiersystem 12, insbesondere dessen Positionsermittlungssystem, eingerichtet, mit der Totalstation 22 bidirektional zu kommunizieren. Die Totalstation 22 verfolgt laufend das Markiersystem 12, ermittelt dessen Position relativ zu einem vordefinierten, ortsfesten Koordinatensystem relativ zum Untergrund 14 und überträgt die ermittelte Position, insbesondere entsprechende Koordinaten, an das Markiersystem 12. Dazu detektiert das Markiersystem 12 mittels seines optischen Empfängers ob und gegebenenfalls auf welches Pixel des optischen Empfängers ein Messstrahl **24** der Totalstation 22 fällt und kommuniziert dies wiederum laufend an die Totalstation 22.

Der Benutzer 10 bewegt das Markiersystem 12 mit Hilfe eines Führungsstabs **26** innerhalb eines Markierbereichs **28,** in dem er noch zu markierende Positionsmarkierungen 18 erwartet. Der Führungsstab 26 ermöglicht eine manuelle Wischbewegung und damit für den Benutzer 10 eine besonders ergonomische durchführbare und zudem rasche Bewegung des Markiersystems 12.

Zusammenfassend zeigen Fig. 1a und Fig. 1b jeweils Varianten eines Verfahrens zum Aufbringen einer Positionsmarkierung 18 für eine Arbeitsposition auf einen Untergrund 14, hier eine Wand beziehungsweise ein Fußboden, an einer ihr zugeordneten Markierungsposition, umfassend die Schritte:
a. Unsystematisches oder systematisches Bewegen des tragbaren Markiersystems 12 über einen Markierbereich 28 (gemäß Fig. 1b) des Untergrunds 14;
b. Regelmäßiges Ermitteln wenigstens einer Position des Markiersystems 12;
c. Markieren an der ermittelten Position des Markiersystems 12, sofern die ermittelte Position mit der Markierungsposition zumindest bis auf ein vordefiniertes Genauigkeitsmaß mit der Markierungsposition übereinstimmt.

Das vordefinierte Genauigkeitsmaß ergibt sich dabei insbesondere durch den Abstand der einzelnen Pixel des optischen Empfängers zueinander sowie der Genauigkeit, mit der aus den ermittelten Positionen der Pixel Positionen der jeweils zugeordneten Markierer ermittelt werden können.

Das hierzu beschriebene tragbare Markiersystem 12 zum Markieren der jeweiligen Positionsmarkierungen 18 auf dem jeweiligen Untergrund 14 an den den Positionsmarkierungen 18 zugeordneten Markierungspositionen, also entlang der Licht-Linie 16 gemäß Fig. 1a beziehungsweise gespeicherten Markierungspositionen, umfasst somit zusammenfassend eine Markiereinheit mit mehreren Markierern, ein Positionsermittlungssystem zur Erfassung einer Position des Markiersystems 12 sowie eine Steuerungseinheit, die eingerichtet ist, wenigstens einmalig mittels der Markiereinheit jeweils eine der Positionsmarkierungen 18 oder zumindest einen Teil der jeweiligen Positionsmarkierung 18 auf dem Untergrund 14 zu markieren, falls sich das Markiersystem 12 an der Markierungsposition oder in einem dem vordefinierten Genauigkeitsmaß entsprechenden Messbereich um die jeweilige Markierungsposition herum befindet, und keine Markierung zu markieren, wenn sich das Markiersystem 12 außerhalb des Messbereichs befindet.

Anhand der folgenden Figuren wird nun der Aufbau des Markiersystems 12 näher erläutert.

**Fig. 2** zeigt dazu eine perspektivische Darstellung des Markiersystems 12.

Das Markiersystem 12 weist eine Bedieneinheit **30** mit einer Anzeigeeinheit **32** auf. Mittels der Bedieneinheit 30 lässt sich das Markiersystem 12 in die verschiedenen Betriebsmodi versetzen. Das Markiersystem 12 ist ferner eingerichtet, auf der Anzeigeeinheit 32 Zustandsinformationen über das Markiersystem 12, beispielsweise einen Füllstand eines Tintenvorrats oder einen Ladezustand eines Akkumulators, darzustellen. Sie ist ferner wie vorangehend beschrieben eingerichtet, auf der Anzeigeeinheit 32 Positionsinformationen, beispielsweise Hinweise an den Benutzer 10 (Fig. 1) in Form von Richtungspfeilen, in welche Richtung das Markiersystem 12 vorzugsweise zu bewegen ist, darzustellen.

In die Bedieneinheit 30 sind die Steuereinheit und das Positionsermittlungssystem integriert. Diese sind durch eine elektronische Schaltung mit einer Mikroprozessoreinheit, einer Speichereinheit, in der entsprechende Programmcodes ausführbar abgelegt sind, einer Kommunikationsschnittstelle sowie mit weiteren entsprechend erforderlichen elektronischen Komponenten ausgebildet.

Des Weiteren weist das Markiersystem 12 einen Handgriff **34** auf. Der Handgriff 34 ist abnehmbar am Markiersystem 12 angeordnet und kann gegen eine Aufnahme für den Führungsstab 26 (siehe Fig. 1b) ausgewechselt werden, mit der der Führungsstab 26 am Markiersystem 12 befestigt werden kann.

Zu erkennen ist ferner ein optischer Empfänger **36.** Der optische Empfänger 36 weist eine zeilenförmige Form auf. Er ist als Zeilensensor ausgebildet. Er erstreckt sich zumindest im Wesentlichen über die gesamte Breite des Markiersystems 12.

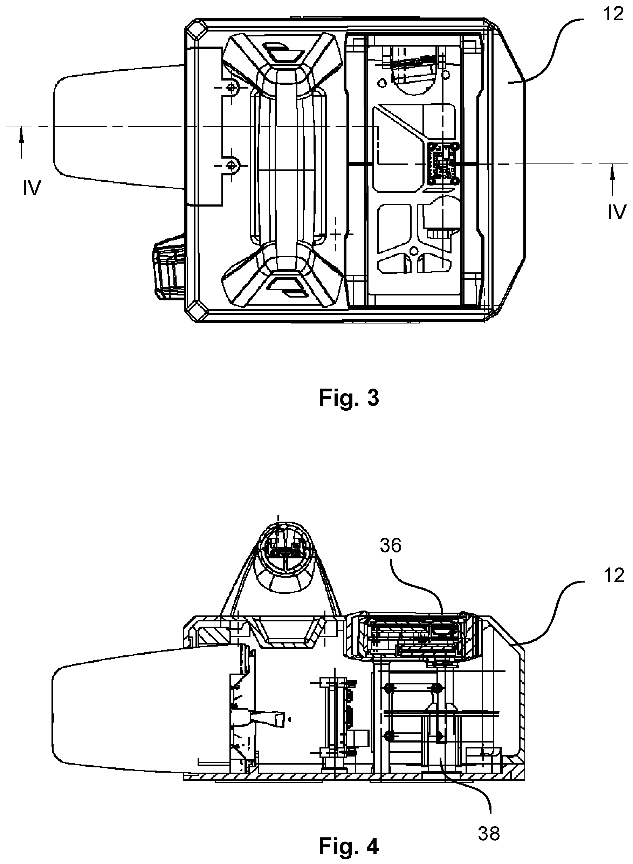

**Fig. 3** zeigt eine Draufsicht auf das Markiersystem 12. **Fig. 4** zeigt eine Schnittansicht auf das tragbare Markiersystem 12 gemäß der Schnittlinie **IV-IV** aus Fig. 3.

Insbesondere anhand von Fig. 4 ist eine Markiereinheit **38** zu erkennen. Die Markiereinheit 38 ist auf einer Unterseite des Markiersystems 12 angeordnet, während sich der optische Empfänger 36 auf einer Oberseite des Markiersystems 12 befindet.

Die Markiereinheit 38 ist insbesondere mittig unterhalb des optischen Empfängers 36 angeordnet. Die Markiereinheit 38 weist 24 Markierer auf. Die Markierer sind als nebeneinander angeordnete und gleichmäßig über die Länge der Markiereinheit 38 hinweg verteilte Tintenstrahldüsen ausgebildet.

## Patentansprüche

1. **Verfahren** zum Aufbringen einer Positionsmarkierung (18) für eine Arbeitsposition auf einen Untergrund (14), beispielsweise eine Wand, eine Decke, ein Fußboden oder dergleichen, an einer ihr zugeordneten Markierungsposition, umfassend die Schritte:
a. Unsystematisches oder systematisches Bewegen eines tragbaren Markiersystems (12) über einen Markierbereich (28) des Untergrunds (14);
b. Ermitteln, vorzugsweise regelmäßiges Ermitteln, wenigstens einer Position des Markiersystems (12);
c. Markieren an der ermittelten Position des Markiersystems (12), sofern die ermittelte Position mit der Markierungsposition übereinstimmt oder zumindest bis auf ein vordefiniertes oder vordefinierbares Genauigkeitsmaß mit der Markierungsposition übereinstimmt.

2. Verfahren nach dem vorhergehenden Anspruch, **dadurch gekennzeichnet, dass** ein ortsfestes Koordinatensystem relativ zum Untergrund (14) festgelegt wird.

3. Verfahren nach einem der vorhergehenden Ansprüche, **dadurch gekennzeichnet, dass** wenigstens eine Lage des Markiersystems (12) ermittelt wird.

4. Verfahren nach einem der vorhergehenden Ansprüche, **dadurch gekennzeichnet, dass** wenigstens zwei Positionen und/oder ein Positionsbereich des Markiersystems (12) parallel ermittelt werden.

5. Verfahren nach einem der vorhergehenden Ansprüche, **dadurch gekennzeichnet, dass** zum Markieren an der ermittelten Position eine Markiereinheit (38) mit wenigstens zwei Markierern, vorzugsweise wenigstens 24 Markierern, verwendet wird.

6. Verfahren nach einem der vorhergehenden Ansprüche, **dadurch gekennzeichnet, dass** ein Benutzer (10) das Markiersystem (12) manuell gemäß Schritt b über den Markierbereich (28) bewegt.

7. Verfahren nach einem der vorhergehenden Ansprüche, **dadurch gekennzeichnet, dass** die Positionsmarkierung (18) an und/oder in einem Gebäude oder einem Gebäudeelement markiert wird.

8. Verfahren nach einem der vorhergehenden Ansprüche, **dadurch gekennzeichnet, dass** mehrere Positionsmarkierungen (18) innerhalb des Markierbereichs (28) markiert werden.

9. Verfahren nach einem der vorhergehenden Ansprüche, **dadurch gekennzeichnet, dass** zunächst das Markiersystem (12) im Rahmen einer initialen Positionierung zu einem Startpunkt innerhalb des Markierbereichs (28) bewegt wird.

10. Tragbares **Markiersystem (12)** zum Markieren einer Positionsmarkierung (18) auf einen Untergrund (14), beispielsweise eine Wand, eine Decke, ein Fußboden oder dergleichen, an einer der Positionsmarkierung (18) zugeordneten Markierungsposition, umfassend
- eine Markiereinheit (38) mit wenigstens einem Markierer;
- ein Positionsermittlungssystem zur Erfassung einer Position des Markiersystems (12) sowie
- eine Steuerungseinheit, die eingerichtet ist, wenigstens einmalig mittels der Markiereinheit (38) eine Positionsmarkierung (18) oder zumindest einen Teil der Positionsmarkierung (18) auf dem Untergrund (14) zu markieren, falls sich das Markiersystem (12) an der Markierungsposition oder in einem einem vordefinierten oder vordefinierbaren Genauigkeitsmaß entsprechenden Messbereich um die Markierungsposition herum befindet, und keine Markierung zu markieren, wenn sich das Markiersystem (12) außerhalb des Messbereichs befindet.

11. Markiersystem nach einem der Anspruch 10, **dadurch gekennzeichnet, dass** das Markiersystem (12) einen Handgriff (34) aufweist.

12. Markiersystem nach einem der Ansprüche 10 oder 11, **dadurch gekennzeichnet, dass** das Markiersystem (12) einen Führungsstab (26) und/oder eine Aufnahme für einen Führungsstab (26) aufweist.

13. Markiersystem nach einem der Ansprüche 10 bis 12, **dadurch gekennzeichnet, dass** das Markiersystem (12) wenigstens einen Distanzsensor, beispielsweise ein Laserdistanzmessgerät, eine Streifenlichtquelle in Verbindung mit einer Streifenlicht-Empfangs- und Auswertungseinheit, einen Laufzeit-Sensor und/oder einen Beschleunigungssensor aufweist.

14. Markiersystem nach einem der Ansprüche 10 bis 13, **dadurch gekennzeichnet, dass** das Markiersystem (12) ein Tachymeter, insbesondere eine Totalstation (22), aufweist und/oder zur Kommunikation mit einem Tachymeter eingerichtet ist.

15. Markiersystem nach einem der Ansprüche 10 bis 14, **dadurch gekennzeichnet, dass** das Markiersystem (12) ein motorisiertes Fortbewegungsmittel umfasst oder dass das Markiersystem (12) an dem motorisierten Fortbewegungsmittel anordenbar ist.
